# EUROPEAN PATENT APPLICATION

(11) **EP 1 868 293 A1**
(43) Date of publication of application: **19.12.2007**
(21) Application number: 06731066.4
(22) Date of filing: 04.04.2006
(51) Int. Cl.: H03K 19/173, G06F 15/80

(54) **COMPUTER SYSTEM, DATA STRUCTURE SHOWING CONFIGURATION INFORMATION, AND MAPPING DEVICE AND METHOD**

(30) Priority: 05.04.2005 JP 2005108386
(71) Applicant: MATSUSHITA ELECTRIC INDUSTRIAL CO., LTD., Osaka 571-8501 (JP)
(72) Inventor: NISHIJIMA, Osamu Matsushita Electric Ind. Co.,Ltd., Chuo-ku, Osaka 540-6207 (JP); YOSHIOKA,Shirou Matsushita Electric Ind. Co.,Ltd., Chuo-ku, Osaka 540-6207 (JP); SASAGAWA,Yukihiro Matsushita Electric Ind. Co.,Ltd., Chuo-ku, Osaka 540-6207 (JP); KAWAGUCHI,Kenichi Matsushita Electric Ind. Co.,Ltd., Chuo-ku, Osaka 540-6207 (JP)
(74) Representative: Grünecker, Kinkeldey, Stockmair & Schwanhäusser Anwaltssozietät
(86) International application number: PCT/JP2006/307118
(87) International publication number: WO 2006/109623

(57) **Abstract**

A configuration information storage section (**108**) stores configuration information for allowing a reconfigurable module to execute a predetermined function. A CPU (**100**) configures attached reconfigurable modules (**103** to **106**) according to the number thereof by referencing the configuration information stored in the configuration information storage section (**108**).

## Description

### Technical Field

The present invention relates to a computer system processing a problem with the use of a reconfigurable module as a constitutional element of which function is capable of being re-configured dynamically, and configuration information for determining a function of the reconfigurable module.

### Background Art

As to conventional techniques, there is a computer system to which a reconfigurable logic circuit is connected as an extension system (Patent Document 1). In another one, a predetermined problem is solved at a high speed by mapping the problem to a plurality of FPGAs (Patent Document 2). Moreover, two reconfigurable circuits are connected on a layout at LSI design (Patent Document 3).
Patent Document 1: UP Patent No. 6438737
Patent Document 2: US Patent No. 6415430
Patent Document 3: US Patent No. 6335635

### Summary of the Invention

### Problems that the Invention is to Solve

In a computer system in which a reconfigurable LSI is implemented, when a problem to be processed becomes large-scale, an enormous amount of time is required for the processing with only the implemented configurable LSI. On the other hand, with a large-scale reconfigurable LSI implemented unnecessarily in advance, the cost of the computer system increases as a whole. Namely, the processing time and the cost falls in a tradeoff relationship, and therefore, a system that can be cope therewith flexibly is awaited.

In each of the above conventional techniques, however, configuration information is mapped only after the entire architecture of the computer system is determined at the initial stage, resulting in inflexibility in the tradeoff relationship between the processing time and the cost. For example, in the technique in Patent Document 1, the reconfigurable logic circuit has no extensibility. In the technique Patent Document 2, inherent mapping is performed on a system in which the plurality of FPGAs are arranged, which achieves no problem solving without any one of the plurality of FPGAs. As to the technique in Patent Document 3, the reconfigurable circuits are connected at design merely, so that no additional reconfigurable circuit can be connected and the reconfigurable circuits cannot be cut off after design. As well, the system cannot be composed of a plurality of reconfigurable LSIs, and the number of reconfigurable LSIs cannot be changed.

The present invention has its first object of providing a computer system capable of flexibly coping with, for example, the case where necessity of processing a large-scale problem occurs in future while suppressing initial cost low.

In order to solve a large-scale problem with a reconfigurable circuit, a plurality of reconfigurable LSIs or a large-scale reconfigurable LSI must be implemented. In the conventional techniques, however, mapping of a large-scale problem to hardware is inherent to a computer system to which one or a plurality of configurable LSIs are implemented. For this reason, when the architecture of the hardware is changed, for example, when the circuit size of one implemented reconfigurable LSI becomes large or the number of implemented reconfigurable LSIs is increased, re-mapping is required.

The present invention has its second object of providing configuration information which requires no re-mapping even when the structure of an implemented reconfigurable LSI is changed.

In sum, the object of the present invention is, in solving a large-scale problem by a computer system to which a plurality of reconfigurable modules are implemented, to achieve mapping irrespective of the number of implemented reconfigurable modules and to provide a computer system capable of flexibly coping with the case where a problem becomes large-scale in future.

### Means for Solving the Problems.

In view of the foregoing, the present invention achieves extension of a reconfigurable module.

Specifically, a computer system in accordance with an aspect of the present invention includes: a CPU; and a configuration information storage section which stores configuration information for allowing a reconfigurable module to execute a predetermined function, wherein the computer system is so structured that one or more reconfigurable modules are attachable, and the CPU configures an attached reconfigurable module according to number of the attached reconfigurable module by referencing the configuration information stored in the configuration information storage section.

In the above aspect, the reconfigurable modules are attachable. When some of the reconfigurable modules are attached, the CPU configures the attached reconfigurable modules according to the number of the attached reconfigurable modules by referencing the configuration information stored in the configuration information storage section for allowing the reconfigurable modules to execute the predetermined function. Thus, the reconfigurable modules become extensible. Accordingly, the computer system can flexibly cope with the case, for example, where a reconfigurable module is attached when a problem becomes large-scale in future though a less number of reconfigurable modules are provided at the initial stage for reduction in cost.

Another aspect of the present invention provides a data structure for representing configuration information for allowing a reconfigurable module to execute a predetermined function, which includes: plural pieces of sub configuration data respectively corresponding to divided functions into which the predetermined function is divided; and internal structure information indicating a relationship between the plural pieces of sub configuration data and input/output data.

With the above data structure employed, the plural pieces of sub configuration data corresponding to the divided functions into which the predetermined function is divided can be assigned to the reconfigurable module attached to the computer system by referencing the internal structure information indicating the relationship between the plural pieces of sub configuration data and the input/output data. Accordingly, even when the number of reconfigurable modules is changed, the attached reconfigurable modules can be configured optimally by referencing the common configuration information.

Still another aspect of the present invention provides a data structure for representing configuration information for allowing a reconfigurable module to execute a predetermined function, which includes: plural pieces of configuration information corresponding to variations in number of reconfigurable modules, wherein each piece of configuration information includes plural pieces of sub configuration data respectively corresponding to divided functions into which the predetermined function is divided.

In general, reconfigurable information is generated in a system different from a computer system. For this reason, when the number of reconfigurable modules attached to a computer system is changed, the configuration information must be acquired again by any means. In contrast, when the plural pieces of configuration information are prepared correspondingly to variations in the number of configurable modules assumed in advance, like the data structure in the present invention, the change in the number of reconfigurable modules can be coped with flexibly.

Yet another aspect of the present invention provides mapping method and system for generating configuration information for allowing a reconfigurable module to execute a predetermined function, which is to perform: algorithm analysis on the predetermined function to generate a graph expressing a relationship between processing and input/output data; and generation of, by dividing each processing in the graph with a predetermined size set as an upper limit, plural pieces of sub configuration data respectively corresponding to divided functions into which the predetermined function is divided and internal structure information indicating a relationship between the plural pieces of sub configuration data and input/output data.

### Effects of the Invention

In the present invention, even when the number of reconfigurable modules is changed, the reconfigurable modules can be configured by referencing the same configuration information to execute the necessary processing.

Hence, when a reconfigurable module having increased processing ability is attached, for example, the same function can be executed within a processing time period as ever by a less number of reconfigurable modules.

Further, even when the function to be executed is increased in scale further, extension of a reconfigurable module according to the increase enables execution within a predetermined processing time period. For example, extension of a reconfigurable module to a system that performs only video replay enables simultaneous operation of replaying the video and recording while converting the received video from HD to SD.

### Brief Description of the Drawings

[FIG. **1**] FIG. **1** is a diagram showing an architecture of a computer system in accordance with one embodiment of the present invention.
[FIG. **2**] FIG. **2** shows a structural example of an attachable mechanism for a reconfigurable LSI.
[FIG. **3**] FIG.**3** is a diagram showing an architecture of the computer system to which reconfigurable LSIs, of which number is different from that in FIG. **1,** is implemented.
[FIG. **4**] FIG. **4** is a diagram showing a construction of a mapping system in accordance with one embodiment of the present invention.
[FIG. **5**] FIG. **5** is a drawing showing one example of the processing of format conversion of a video from HD to SD.
[FIG.**6**] FIG. **6** is a diagram showing an example indicating a processing result of an algorithm analyzing section in the mapping system of FIG. **4**.
[FIG. **7**] FIG. **7** is a diagram showing a processing result of a configuration information generating section in the mapping system of FIG. **4**.
[FIG. **8**] FIG. **8** presents diagrams showing an example of a processing result of a number providing section in the mapping system of FIG. **4**.
[FIG. **9**] FIG. **9** is a diagram showing an example of a processing result of a communication information providing section in the mapping system of FIG. **4** and showing one example of configuration information in accordance with the present invention.
[FIG. **10**] FIG. **10** is a schematic diagram showing a state where the configuration information in FIG. **9** is stored.
[FIG. **11**] FIG. **11** is a diagram showing an example of mapping of a communication memory.
[FIG. **12**] FIG. **12** is a flowchart depicting an operation of a computer system in accordance with one embodiment of the present invention.
[FIG. **13**] FIG. **13** presents diagrams specifically showing an operation of the computer system of FIG. **1**.
[FIG. **14**] FIG. **14** presents diagrams specifically showing an operation of the computer system of FIG. **3**.
[FIG. **15**] FIG. **15** presents diagrams specifically showing an operation in the case where two reconfigurable LSIs are replaced by one reconfigurable LSI having an integration twice as large as each of the two configurable LSIs in the computer system of FIG. **3**.
[FIG. **16**] FIG. **16** is a diagram showing another example of the configuration information in accordance with the present invention.
[FIG. **17**] FIG. **17** is a schematic diagram showing a state where the configuration information of FIG. 16 is stored.
[FIG. **18**] FIG. **18** is a diagram showing another example of a processing result of the configuration information generating section in the mapping system of FIG. **4.**
[FIG. **19**] FIG. **19** is a diagram showing another example of the architecture of the computer system in accordance with the present invention.
[FIG. **20**] FIG. **20** is a diagram showing another example of the architecture of the computer system in accordance with the present invention.
[FIG. **21**] FIG. **21** is a diagram showing still another example of the architecture of the computer system in accordance with the present invention.
[FIG. **22**] FIG. **22** is a diagram showing yet another example of the architecture of the computer system in accordance with the present invention.
[FIG. **23**] FIG. **23** is a diagram showing still another example of the architecture of the computer system in accordance with the present invention.
[FIG. **24**] FIG. **24** is diagram showing an example of the configuration information in the architecture of FIG. **23.**
[FIG. **25**] FIG. **25** shows another example of the architecture of the computer system in accordance with the present invention.
[FIG. **26**] FIG. **26** shows still another example of the architecture of the computer system in accordance with the present invention.
[FIG. **27**] FIG. **27** shows yet another example of the architecture of the computer system in accordance with the present invention.
[FIG. **28**] FIG. **28** is a diagram showing an example of the configuration information in the architecture of FIG. **26** or FIG. **27.**

### Explanation of Reference Numerals

- **100**: CPU
- **101**: main memory
- **102**: bus bridge
- **103,104, 105,** and **106**: reconfigurable LSI (reconfigurable module)
- **107**: communication memory
- **108**: configuration information storage memory (configuration information storage section)
- **110**: main bus
- **111**: communication bus
- **120**: communication bus
- **121**: socket (joint part)
- **122**: reconfigurable LSI
- **200**: algorithm analyzing section
- **201**: configuration information generating section
- **202**: number providing section
- **203**: communication information providing section
- **300**: configuration sequence determination information
- **301**: internal structure information
- **302**: implementation sequence information
- **400**: configuration sequence determination information
- **401**: internal structure information
- **402**: dependence information
- **404** to **410**: sub configuration data

### Best Modes for Carrying Out the Invention

The best modes for carrying out the present invention will be described below with reference to the accompanying drawings.

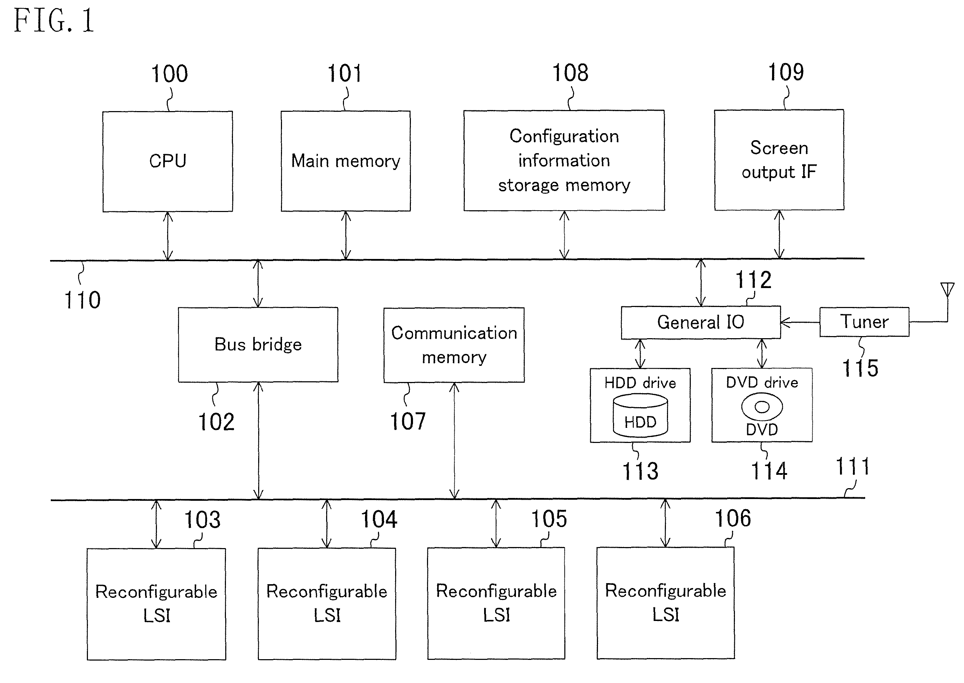

FIG. **1** is a diagram showing an architecture of a computer system in accordance with one embodiment of the present invention. In FIG. **1,** a CPU **100** as a processor unit reads out a program stored in a main memory **101** via a main bus **110** and operates according to the program, thereby controlling the entire computer system. The main bus **110** is connected to a communication bus **111** through a bus bridge **102.** The bus bridge **102** has a function of adjusting the master/slave relationship between devices connected to the main bus **110** or the communication bus **111** in data interchange.

A configuration information storage memory 108 as a configuration information storage section, a screen output interface (IF) **109,** and a general IO **112** are connected to the main bus **110**. The computer system can perform data interchange with a HDD drive **113**, a DVD drive **114,** a tuner **115,** and the like via the general IO **12.**

Reconfigurable LSIs **103** to **106** as devices of which functions are reconfigurable and a communication memory **107** are connected to the communication bus **111**. The reconfigurable LSIs **103** to **106** perform communication with one another via the communication memory **107.**

The reconfigurable LSIs **103** to **106** are attachable to the computer system shown in FIG. **1** and function as reconfigurable modules.

The configuration information storage memory **108** stores configuration information for allowing each reconfigurable module to execute a predetermined function. Upon determination of the internal connection of each reconfiguration modules **103** to **106** according to the configuration information stored in the configuration information storage memory **108,** the functions of the reconfigurable modules **103** to **106** become configurable. In other words, the configuration information is information used for determining the internal connections of the reconfigurable LSIs in order to allow each reconfigurable LSI as a reconfigurable device to execute a predetermined function. The CPU **100** configures attached reconfigurable modules according to the number of the attached reconfigurable modules by referencing the configuration information stored in the configuration information storage memory **108.**

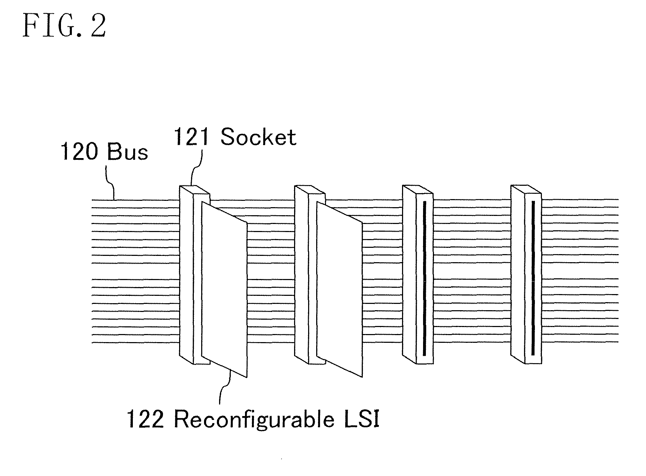

FIG. **2** shows a structural example of an attachable mechanism for a reconfigurable LSI. The structure shown in FIG. **2** includes four sockets **121** as joint parts connected to the communication bus **120** on a board, wherein a reconfigurable LSI **122** is attachable to each socket **121.** The structures of the sockets **121** and the communication bus **120** can be attained in the same manner as that to connect a memory to a personal computer, for example. In the example shown in FIG. **2,** two reconfigurable LSIs **122** are implemented while two sockets **121** are opened, wherein the number of reconfigurable LSIs capable of being implemented is four to the maximum.

Provision of the mechanism shown in FIG. **2** in a computer system enables change in the number of reconfigurable LSIs to be implemented. For example, in the computer system shown in FIG. **1,** a plurality of sockets **121** shown in FIG. **2** are provided at the communication bus **111.**

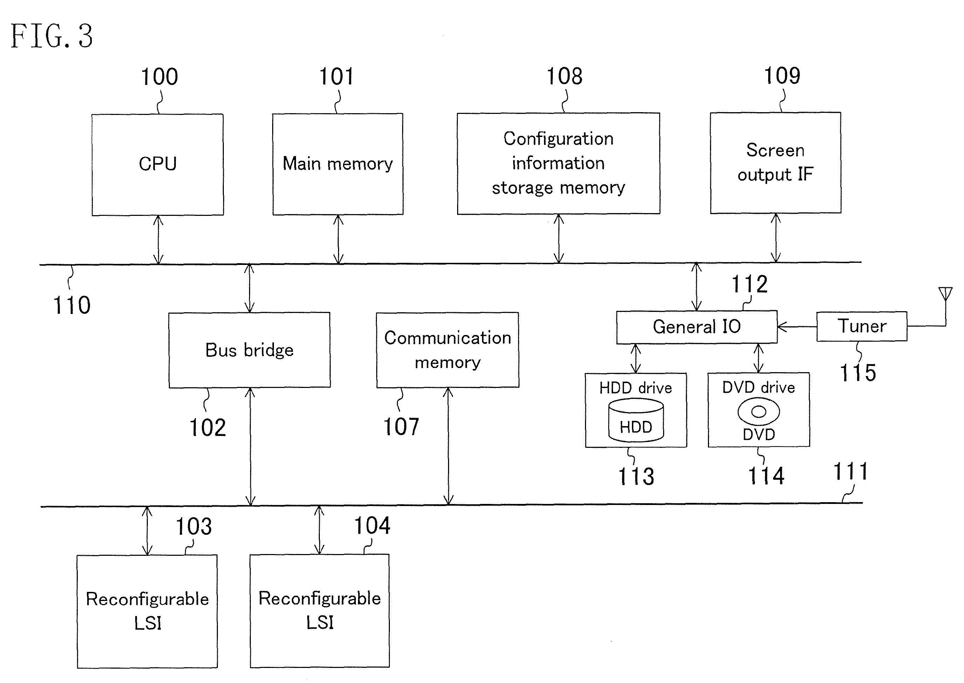

FIG. **3** shows an architecture of the computer system in the case where two reconfigurable LSIs **103, 104,** of which number which is different from that in FIG.**1**, are implemented.

The following description assumes that the reconfigurable LSIs **103** to **106** have the same circuit size.

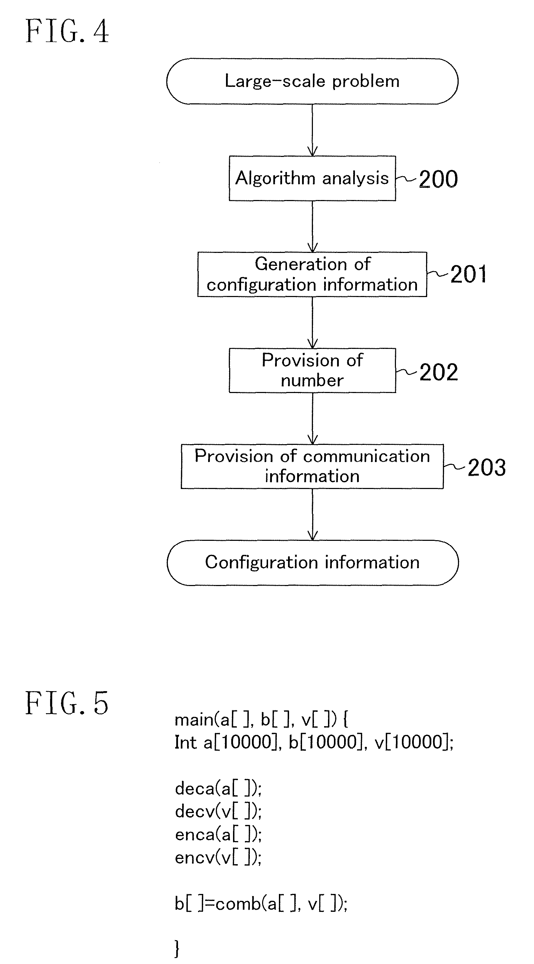

FIG. **4** is a diagram showing a construction of a mapping system in accordance with one embodiment of the present invention. The mapping system of FIG. **4** determines how a large-scale problem to be processed in the computer system as shown in FIG. **1** is assigned to the respective reconfigurable LSIs of the computer system, which is called mapping in the present specification. Namely, the mapping system of FIG. **4** generates configuration information for allowing each reconfigurable module to execute a predetermined function.

To the mapping system of FIG. **4,** a large-scale problem to be processed in the computer system is input first. The problem herein means a target that the computer system is to processed, such as encoding/decoding of MPEG, cryptanalysis, or the like, namely, a predetermined function that the computer system is to perform.

The input large-scale problem is developed into a graph composed of a plurality of stages and connection braches in an algorithm analyzing section **200** first. Then, the plurality of developed stages are converted into plural pieces of sub configuration data each having an upper limit of its data amount in a configuration information generating section **201.** The numbers are provided to the plural pieces of converted sub configuration data in a number providing section **202.** Then in a communication information providing section **203,** communication information between the reconfigurable modules configured according to the sub configuration data is provided to the configuration information.

When it is supposed that the reference numerals **200** to **203** in **FIG. 4** are processing steps, FIG. **4** serves as a flowchart depicting a mapping method for generating configuration information for allowing reconfigurable modules to execute a predetermined function in accordance with one embodiment of the present invention.

The specific processing of the mapping system of FIG. **4** will be described further in detail with reference to FIG. **5** to FIG. **9.** As one example of a large-scale problem, processing for format conversion of a video from HD (High Definition) to SD (Standard Definition) will be referred to in the following description.

FIG. 5 indicates an example of the processing for format conversion of a video from HD to SD. In FIG. 5, **deca** indicates a function for decoding audio data, **decv** indicates a function for decoding video data, **enca** indicates a function for encoding audio data, and **encv** indicates a function for encoding video data. As well, **comb** indicates a function for generating stream data from video data generated with **encv** and audio data generated with **enca.**

In the present embodiment, the reconfigurable LSIs **103** to **106** are attachable. Namely, the architecture of the computer system is not fixed in advance and is changeable in contrast to that of the conventional one. On the other hand, a mapping system is structured as a separate system from a computer system in general, and therefore, it is difficult to perform re-mapping every time the architecture of the computer system is changed. For this reason, it is important how to generate, when the architecture of the computer system is changed, configuration information for reconstruction of the system without necessitating re-mapping.

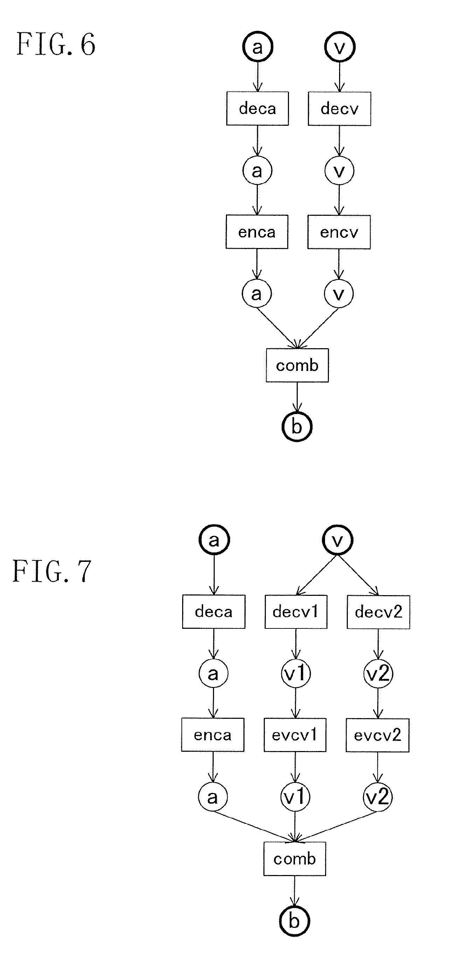

FIG. **6** shows an example of a processing result of the algorithm analyzing section **200** in the mapping system of FIG. **4.** In FIG. **6,** algorithm analysis is performed on the processing of FIG. **5** as the predetermined function. As shown in FIG. **6,** a graph showing the relationship between the processing and input/output data is generated. In detail, the input/output data are enclosed by circles while the processing are enclosed by boxes. The data streams are indicated by arrow-like connection branches.

As shown in FIG. **6, enca** uses the processing result of **deca** while **encv** uses the processing result of **deca.** Further, **comb** uses both the processing results of **enca** and **encv.** While, there is no dependence between **deca** and **decv** and between **enca** and encv, and therefore, each pair can be executed in parallel with each other.

In general, video processing has a larger processing amount than audio processing. Accordingly, in this example, each of **decv** and **encv** is too large-scale to be mapped to one reconfigurable LSI.

FIG. **7** is a diagram showing an example of a processing result of the configuration information generating section **201** in the mapping system of FIG. **4.** In FIG. **7,** each processing in the graph of FIG. **6** has a predetermined size as an upper limit as a result of division. In FIG. **7,** input/output data are enclosed by circles while sub configuration data are enclosed by boxes. The data streams are indicated by arrow-like connection branches.

Herein, the sub configuration data means data for configuring a configurable module in the configuration information for configuring the entire computer system.

Further, the predetermined size means, specifically, a scale of processing capable of being mapped to each reconfigurable LSI **103** to **106.** The predetermined size is determined from the specification of to-be-attached reconfigurable modules. For example, the data size to the extent that data can be mapped to a reconfigurable module having a minimum circuit size is set as the predetermined size. When sub configuration data is set so as not to have a size larger than the predetermined size, the generated sub configuration data necessarily has a size that enables configuration of one reconfigurable LSI.

FIG. **7** is different from FIG. **6** in that **decv** and **encv** are divided into **decv1** and **decv2** and **encv1** and **encv2,** respectively. As described above, each of **decv** and **encv** is large-scale and accordingly is divided into two as a result of setting of the predetermined size as an upper limit. Division is performed by analyzing each algorithm of the processing and dividing the analyzed algorithms into sub algorithms capable of being processed in parallel with each other.

Each of the algorithm and the divided sub algorithms is converted into sub configuration data as information for determining the internal connection of a corresponding reconfigurable LSI, so that plural pieces of sub configuration data corresponding to the divided functions into which the predetermined function is divided are acquired. Further, internal construction information is acquired which indicates the relationship between the sub configuration data and the input/output data, as shown in FIG. **7.** Namely, the boxes in FIG. **6** represent the processing vaguely while the boxes in FIG. **7** represent the sub configuration data for configuring the respective reconfigurable LSIs.

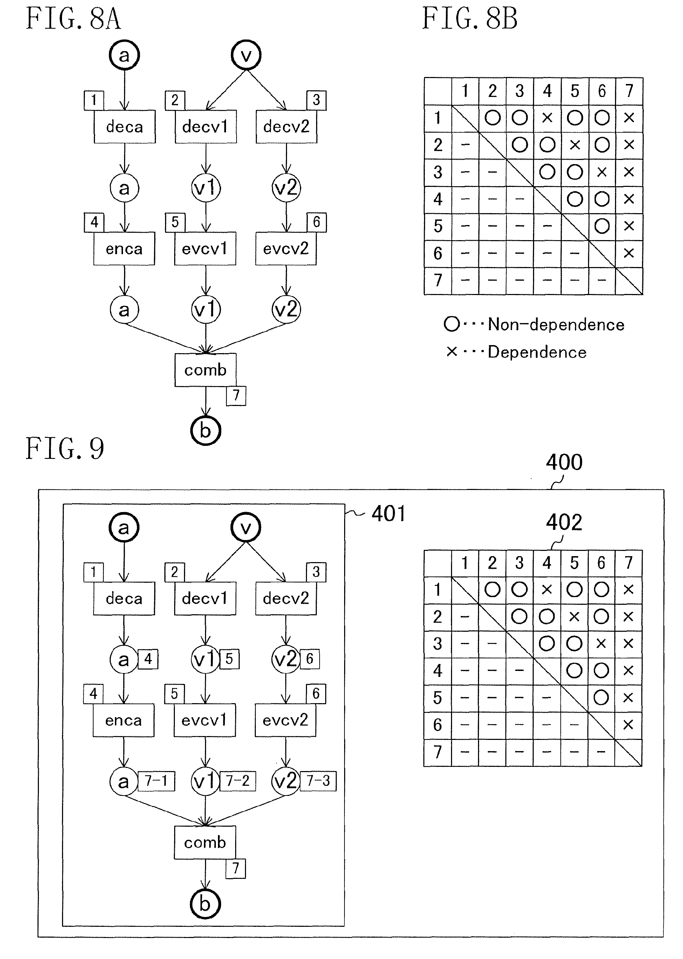

FIG. **8** presents diagrams showing an example of a processing result of the number providing section **202** in the mapping system of FIG. **4.** In FIG. **8(a),** each sub configuration data is provided with serial numbers in the internal structure information of FIG. **7.** In other words, the a serial number enclosed by boxes are provided at the shoulders of the sub configuration data enclosed by boxes. Further, as shown in FIG. **8(b),** dependence information indicating dependence between the sub configuration data is generated. In the table data in FIG. **8(b),** the numerals are the serial numbers provided to the sub configuration data white o and X indicate non-dependence and dependence. Namely, o means that the sub configuration data are capable of being mapped to different configurable LSIs at the same timing while X means that one of sub configuration data to which a large number is provided is capable of being mapped only after the processing of the sub configuration data to which a small number is provided is completed.

FIG. **9** is a diagram showing an example of a processing result of the communication information providing section **203** in the mapping system of FIG. **4.** In FIG. **9**, numbers are provided to respective pieces of intermediate data in the middle of the processing in the internal structure information in FIG. **8.** Specifically, the numbers enclosed by boxes are assigned at the shoulders of the respective pieces of intermediate data. The numbers are serial numbers for data to be put into the communication memory in communication between reconfigurable modules. In this state, the configuration information for configuring the computer system is completed. Then, configuration sequence determination information **400** including the internal structure information **401** and the dependence information **402** and the configuration information composed of the plural pieces of sub configuration data are stored into the configuration information storage memory **108** in FIG. **1.**

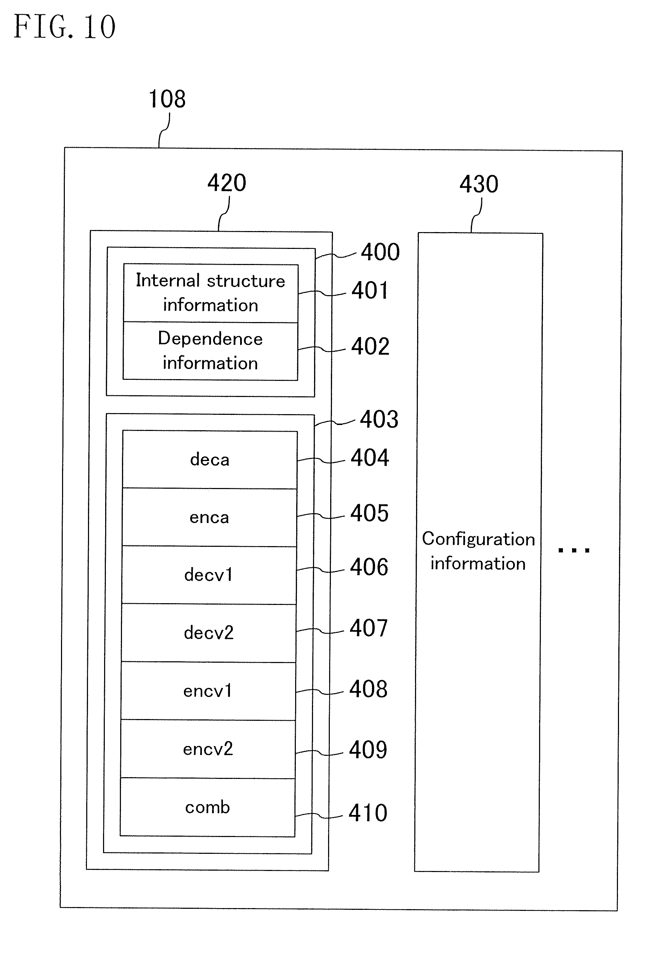

FIG. **10** is a schematic diagram showing the state where the configuration information is stored in the configuration information storage memory **108.** In FIG. **10,** reference numeral **400** denotes the configuration sequence determination information including the internal structure information **401** and the dependence information **402,** and **403** denotes a sub configuration data module having plural pieces of sub configuration data **404** to **410.** The configuration sequence determination information **400** and the sub configuration data module **403** compose the configuration information 420. Configuration information **430** for attaining another function is also stored in the configuration information storage memory **108.** The configuration information is implemented in the configuration information storage memory **108** in advance, for example. Alternatively, the configuration information may be recorded in a computer-readable recording medium, such as a DVD in advance so as to be read out and be installed in the configuration information storage memory **108** via the general IO **112.**

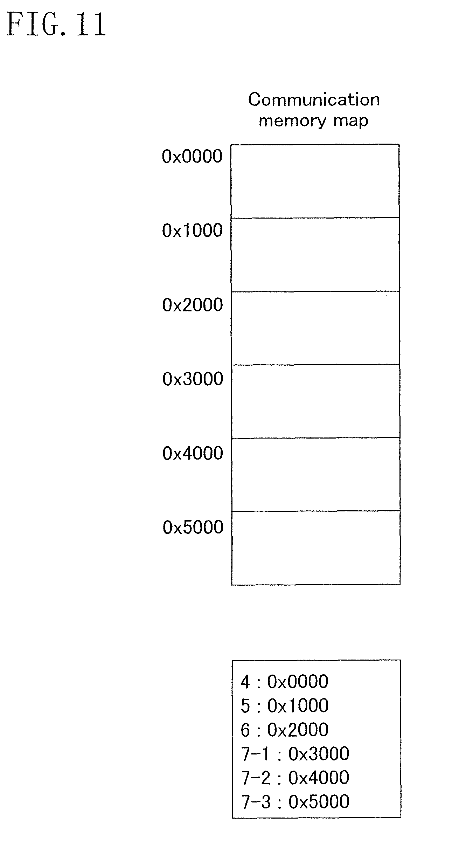

FIG. **11** shows an example of mapping to the communication memory **107** in FIG. **1.** In FIG. **11,** the respective pieces of intermediate data to which the numbers are provided in FIG. **9** are mapped. A cross-reference between the intermediate data and memory addresses is given at a lower address for being used for communication in operation.

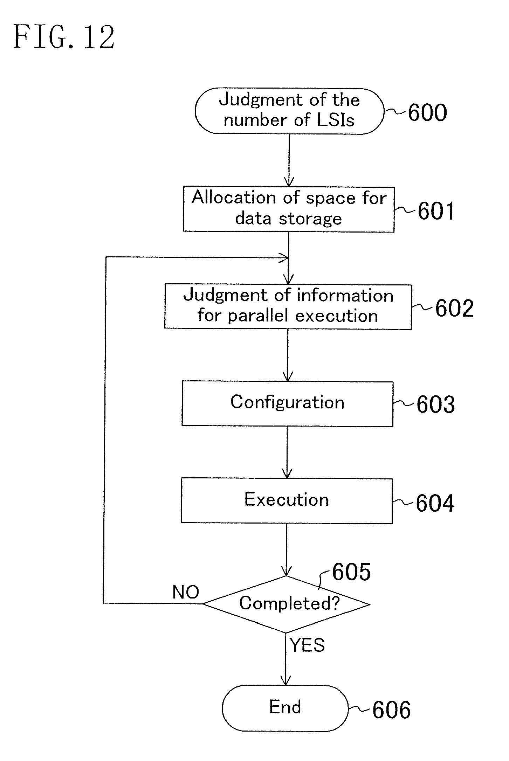

FIG. **12** is a flowchart depicting an operation of the computer system in accordance with the present embodiment. As depicted in FIG. **12,** the CPU **100** first judges the number of attached reconfigurable LSIs (600). Then, space for data storage is allocated in the main memory **101** and the communication memory **107** by referencing the internal structure information **401** in the configuration information stored in the configuration information storage memory **108** (601).

Next, the CPU **100** references the internal structure information **401** and the dependence information **402** of the configuration information stored in the configuration information storage memory **108** to determine sub configuration data to be executed in parallel with each other according to the number of the attached reconfigurable LSIs (602). Then, the reconfigurable LSIs are configured with the use of the sub configuration data (603), and each reconfigurable LSIs is allowed to execute the processing (604). The above steps 602 to 603 are repeated until configuration and processing of all of the sub configuration data are executed (605). When the configuration and processing of all of the sub confirmation data are executed, the operation is terminated (606).

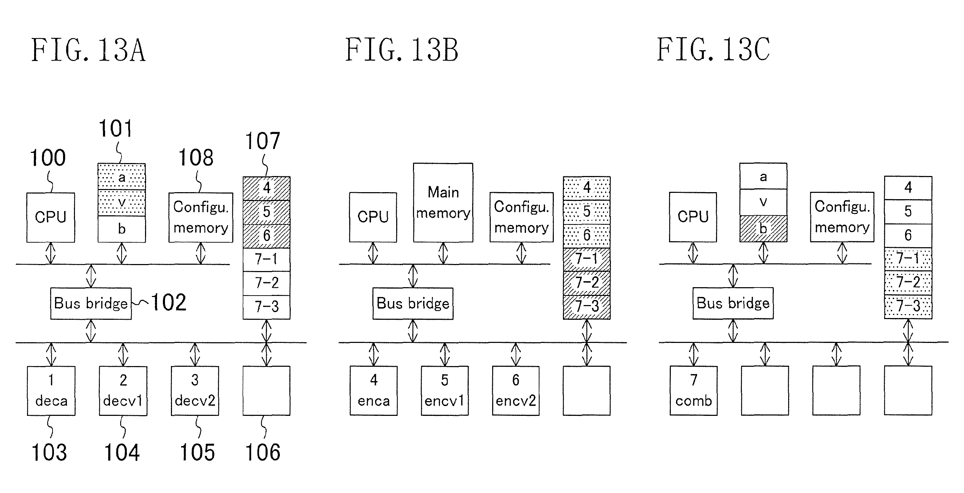

Concrete description will be given to the operation of the computer system of FIG. **1** with reference to FIG.**13.** Suppose herein that the configuration information shown in FIG. **9** is stored in the configuration information storage memory **108.** The CPU **100** first judges the number of attached reconfigurable LSIs **103** to **106** as four (600). Then, as shown in FIG. **13(a),** space where input data **a, v** and output data **b** are to be stored is allocated in the main memory **101** while space where the intermediate data with the numbers 4, 5, 6, 7-1, 7-2, and 7-3 are to be stored are allocated in the communication memory **107** (601).

Next, the CPU **100** assigns the sub configurable data to the reconfigurable LSIs **103** to **106** to allow them to execute the processing. Herein, on the basis of the fact that the number of the attached reconfigurable LSIs is four, configuration is executed three times by referencing the internal structure information **401** and the dependence information **402** stored in the configuration information storage memory **108.**

First, as shown in FIG. **13(a),** the CPU **100** judges the sub configuration data with the numbers 1, 2, and 3, namely, **deca**, **decv1**, and **decv2** to be executed in parallel with one another (602) and configures the reconfigurable LSIs **103** to **105** with the use of the sub configuration data (603). Then, the CPU **100** allows the reconfigurable LSIs **103** to **105** to execute the processing (604). In so doing, the input data **a, v** stored in the main memory **101** are input into the reconfigurable LSIs **103** to **105** via the bus bridge **102,** and the intermediate data with the numbers 4, 5, and 6 obtained as a result of the processing are stored into the communication memory **107.**

Next, as shown in FIG. **13(b),** the CPU **100** judges that the sub configuration data with the numbers 4, 5, and 6, namely, **enca, encv1,** and **encv2** are to be executed in parallel with on another (602) and configures the reconfigurable LSIs **103** to **105** with the use of the sub configuration data (603). Then, the reconfigurable LSIs **103** to **105** are allowed to execute the processing (604). In so doing, the intermediate data with the numbers 4, 5, and 6 stored in the communication memory **107** are input into the reconfigurable LSIs **103** to **105,** and the intermediate data with the numbers 7-1, 7-2, and 7-3 obtained as a result of the processing are stored into the communication memory **107.**

Subsequently, as shown in FIG. **13(c),** the CPU **100** judges that the sub configuration data with the number 7, namely, **comb** is to be executed (602), configures the reconfigurable LSI **103** with the use of the sub configuration data (603), and then, allows the reconfigurable LSI **103** to execute the processing (604). In so doing, the intermediate data with the numbers 7-1, 7-2, and 7-3 stored in the communication memory **107** are input into the reconfigurable LSI **103,** and the output data **b** obtained as a result of the processing is stored into the main memory **101** via the bus bridge **102.** Thus, all the processing is completed, thereby terminating the operation (605 and 606).

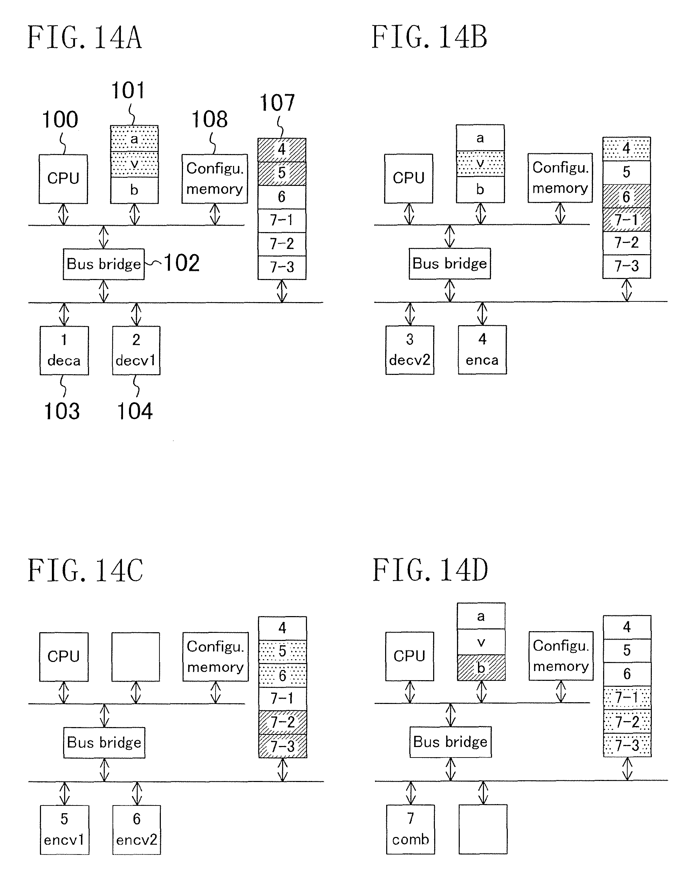

As well, concrete description will be given to the operation of the computer system of FIG. **3** with reference to **FIG.14.** Suppose herein that the configuration information shown in FIG. **9** is stored in the configuration information storage memory **108.** The CPU **100** first judges the number of attached reconfigurable LSIs **103**, **104** as two (600). Then, as shown in FIG. **14(a)**, the space where the input data **a**, **v** and the output data **b** are to be stored is allocated in the main memory **101** while the space where the intermediate data with the numbers 4, 5, 6, 7-1, 7-2, and 7-3 are to be stored are allocated in the communication memory **107** (601).

Next, the CPU **100** assigns the sub configuration data to the reconfigurable LSIs **103, 104** to allow them to execute the processing. Herein, on the basis of the fact that the number of the attached reconfigurable LSIs is two, configuration is executed four times by referencing the internal structure information **401** and the dependence information **402** stored in the configuration information storage memory **108.**

First, as shown in FIG. **14(a),** the CPU **100** judges the sub configuration data with the numbers 1 and 2, namely, **deca** and **decv1** to be executed in parallel with each other (602) and configures the reconfigurable LSIs **103** and **104** with the use of the sub configuration data (630). Then, the CPU **100** allows the reconfigurable LSIs **103** and **104** to execute the processing (604). In so doing, the input data **a, v** stored in the main memory **101** is input into the reconfigurable LSIs **103** and **104** via the bus bridge **102,** and the intermediate data with the numbers 4 and 5 obtained as a result of the processing are stored into the communication memory **107.**

Next, as shown in FIG. **14(b),** the CPU **100** judges that the sub configuration data with the numbers 3 and 4, namely, **decv2** and **enca** to be executed in parallel with each other (602) and configures the reconfigurable LSIs **103, 104** with the use of the sub configuration data (603). Then, the reconfigurable LSIs **103, 104** are allowed to execute the processing (604). In so doing, the input data **v** stored in the main memory **101** is input into the reconfigurable LSI **103** via the bus bridge **102,** the intermediate data with the number 4 stored in the communication memory **107** is input into the reconfigurable LSI **104,** and the intermediate data with the numbers 6 and 7-1 obtained as a result of the processing are stored into the communication memory **107.**

Subsequently, as shown in FIG. **14(c),** the CPU **100** judges the sub configuration data with the numbers 5 and 6, namely, **encv1** and **encv2** to be executed in parallel with each other (602), configures the reconfigurable LSIs **103, 104** with the use of the sub configuration data (603), and then, allows the reconfigurable LSIs **103, 104** to execute the processing (604). In so doing, the intermediate data with the numbers 5 and 6 stored in the communication memory **107** are input into the reconfigurable LSIs **103, 104,** and the intermediate data with the numbers 7-2 and 7-3 obtained as a result of the processing are stored into the communication memory **107.**

Thereafter, as shown in FIG. **14(d),** the CPU **100** judges the sub configuration data with the number 7, namely, **comb** to be executed (602), configures the reconfigurable LSI **103** with the use of the sub configuration data (603), and then, allows the reconfigurable LSI **103** to execute the processing (604). In so doing, the intermediate data with the numbers 7-1, 7-2, and 7-3 stored in the communication memory **107** are input into the reconfigurable LSI **103,** and the output data **b** obtained as a result of the processing is stored into the main memory **101** via the bus bridge **102.** Thus, all the processing is completed, thereby terminating the operation (605 and 606).

In contrast to the processing divided by three in FIG. **13** in the computer system to which four reconfiguration LSIs are attached as shown in FIG. **1,** the processing is divided by four in the computer system to which two reconfiguration LSIs are attached as shown in FIG. **3.** Accordingly, according to the present embodiment, even if the number of attached reconfigurable LSIs becomes different, the computer system can be configured by referencing the same configuration information. Hence, it becomes possible that the processing is executed with the use of a less number of reconfigurable LSIs initially and is executed at high speed by attaching a reconfigurable LSI thereafter.

It is noted that in the case where the processing ability of each reconfigurable LSI in FIG. **3** is higher than that of each reconfigurable LSI in FIG. 1, the same processing as that shown in FIG. **13** may be able to be executed.

Further, if the processing shown in FIG. **14** takes much time, a reconfigurable LSI may be attached to attain the architecture shown in FIG. **1** for achieving higher processing ability.

The processing shown in FIG. **13** does not uses the reconfigurable LSI **106.** When the reconfigurable LSI **106** is used, another piece of processing can be executed in parallel with the processing shown in FIG. **13.** In FIG. **13,** the processing for recording a video is executed. With the use of the reconfigurable LSI **106,** a TV program can be watched while the video is recorded, for example.

The description heretofore supposes that the reconfigurable LSIs to be attached are all the same in circuit size. It is needless to say, however, that the reconfigurable LSIs to be attached may be different from each other in circuit size. With such a case taken into consideration, it is preferable to include information on size of each sub configuration data in the configuration information. Specifically, information (hereinafter referred to as size information) indicating the circuit size of each reconfigurable LSI that can be configured with the use of the sub configuration data is stored in the configuration information storage memory **108.** This permits the computer system to cope flexibly with, for example, replacement of a currently attached reconfigurable LSI by a further highly integrated reconfigurable LSI in future.

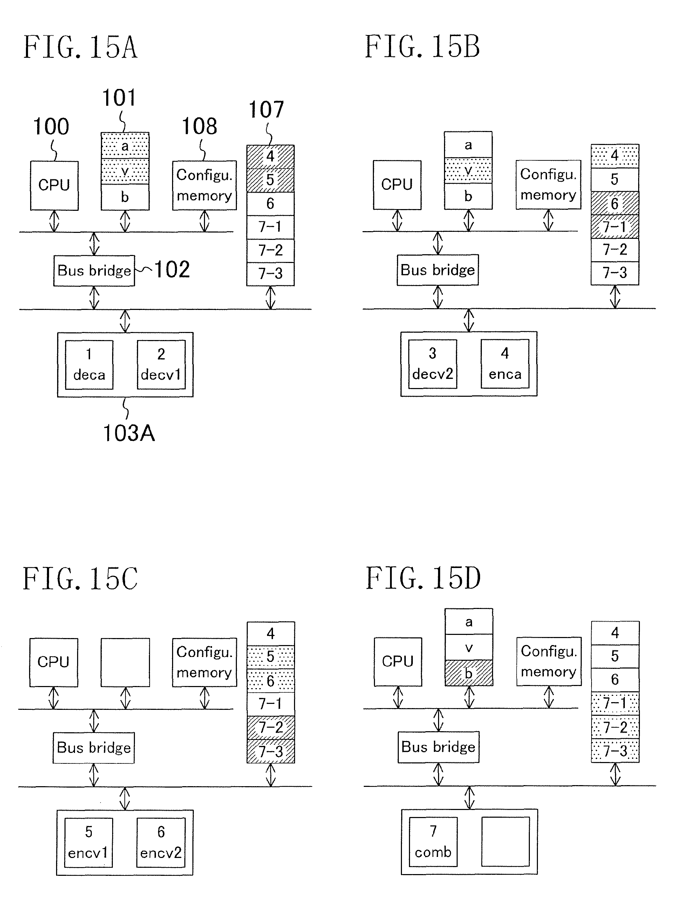

FIG. **15** shows an operation in the case where the two reconfigurable LSIs **103, 104** are replaced by one reconfigurable LSI **103A** having integration twice as high as each of them in the computer system in FIG. **3.** The CPU **100** references the size information stored in the configuration information storage memory **108** to assign two pieces of sub configuration data to the one reconfigurable LSI **103A.** Whereby, data of which size is twice as large as that of each reconfigurable LSI **103, 104** in FIG. **3** is implemented to the reconfigurable LSI **103A.**

Specifically, first, the reconfigurable LSI **103A** is configured with the use of the sub configuration data with the numbers 1 and 2, namely, **deca** and **decv1,** as shown in FIG. **15(a).** Then, the reconfigurable LSI **103A** is configured with the use of the sub configuration data with the numbers 3 and 4, namely, **decv2** and **enca**, as shown in FIG. **15(b),** is configured with the use of the sub configuration data with the number 5 and 6, namely, **encv1** and **encv2,** as shown in FIG. **15(c),** and finally, is configured with the use of the sub configuration data with the number 7, namely **comb,** as shown in FIG. **15(d).** The processing to be executed is the same as that shown in FIG. **14.**

Of course, storage of the size information permits the computer system to cope flexibly with implementation of a highly integrated reconfigurable LSI and a less integrated reconfigurable LSI in combination.

The aforementioned dependence information and size information may not be included in the configuration information. For example, if variations in the number of to-be-attached reconfigurable modules are known, sequences of assignment of the sub configuration data may be set according to the variations. Specifically, the configuration information may include, in place of the dependence information, implementation sequence information indicating sequences of assignment of each sub configuration data which are determined according to the variations in the number of to-be-attached reconfigurable modules.

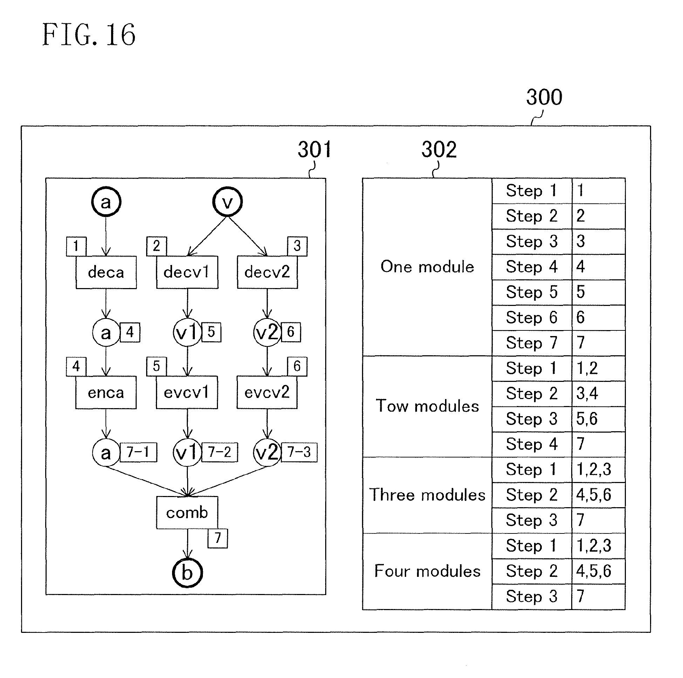

FIG. **16** shows one example of the configuration information including the implementation sequence information. In FIG. **16,** configuration sequence determination information **300** includes internal structure information **301,** which is the same as the internal structure information **401** in FIG. **9,** and implementation sequence information **302.** The implementation sequence information **302** indicates which sub configuration data are to be implemented in the steps in the respective cases with one to four modules. It is supposed herein that the number of sockets for reconfigurable LSIs in the computer system is four.

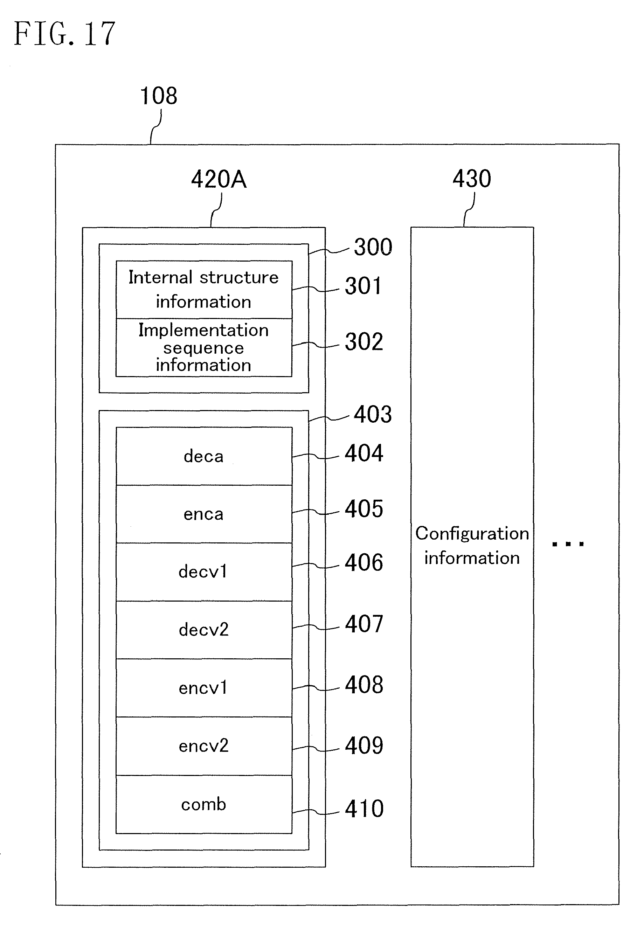

The same processing as that descried above can be executed by referencing the configuration information of FIG. **16,** rather than the configuration information of FIG. **9,** stored in the configuration information storage memory **108.** FIG. **17** is a schematic diagram showing the state where the configuration information of FIG. **16** is stored in the configuration information storage memory **108.** In FIG. **17,** reference numeral **300** denotes the configuration sequence determination information including the internal structure information **301** and the implementation sequence information **302,** and **403** denotes a sub configuration data module having plural pieces of sub configuration data 404 to **410.** The configuration sequence determination information **300** and the sub configuration data module **403** compose configuration information **420A.**

Further, in the example shown in FIG. **16,** the implementation sequence information **302** shares the configuration sequence determination information **300** with the internal structure information **301** and indicates the sub configuration data to be implemented in the respective steps in each variation in the number of reconfigurable modules. Alternatively, mapping may be performed for each variation in the number of reconfigurable modules for directly providing configuration information to each reconfigurable module. Specifically, the configuration information may be generated for each variation in the number of to-be-attached reconfigurable modules. In this case, the configuration information storage memory **108** stores, according to the variations in the number of to-be-attached reconfigurable modules, plural pieces of configuration information including plural pieces of sub configuration data corresponding to functions into which the predetermined function is divided.

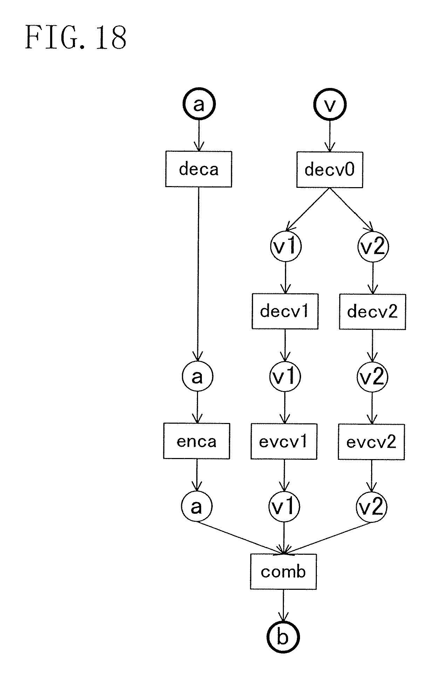

FIG. **18** shows another example of a processing result of the configuration information generating section **201** in the mapping system of FIG. **4.** Though FIG. **7** shows the example where the algorithm is divided into two parts capable of being processed in parallel with each other, some video cannot be decoded completely in parallel. Accordingly, in FIG. **18,** sub configuration data is generated as **decv0** for parts to be processed in common (first processing in this case). In actual generation of configuration information, scheduling might have to be done so that parts connected in series and parts connected in parallel are optimized.

The architecture of the computer system so structured that reconfigurable modules are attachable is not limited to FIG. **1** and FIG. **3,** and various architectures may be contemplated. Other examples of the architecture will be described below. In the drawings referred to in the following description, the same reference numerals as those in FIG. **1** and FIG. **3** are assigned to common constitutional elements for omitting the detailed description thereof.

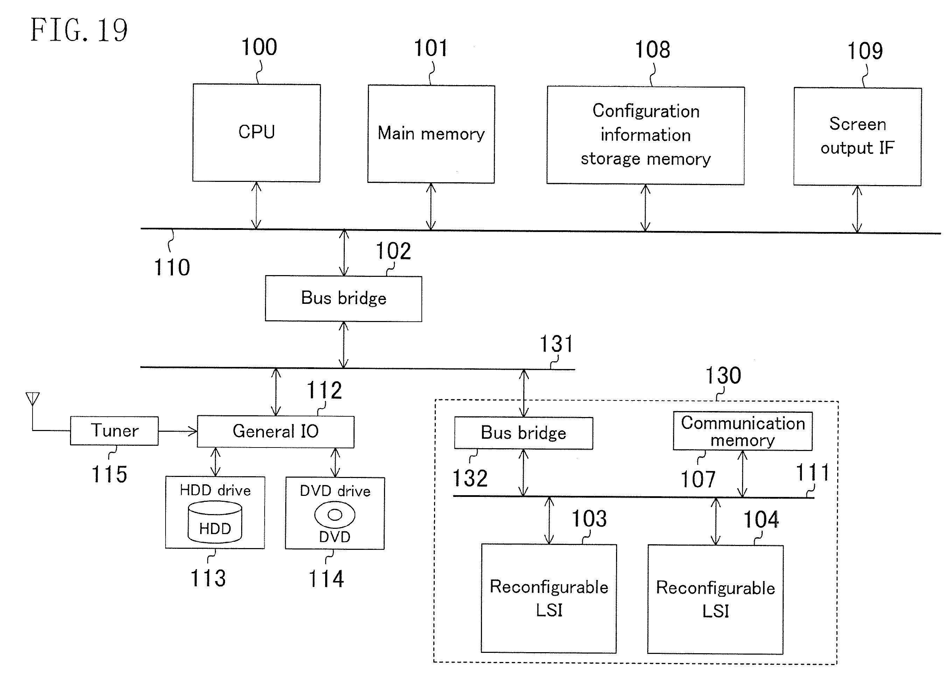

FIG. **19** shows a computer system including bus bridges in two stages in contemplation of implementation to a personal computer. A reconfigurable block **130** is connected to an IO bus **131.** Reconfigurable LSIs **103, 104** are attachable to the reconfigurable block **130** and are capable of interchanging data with the IO bus **131** via a bus bridge **132.**

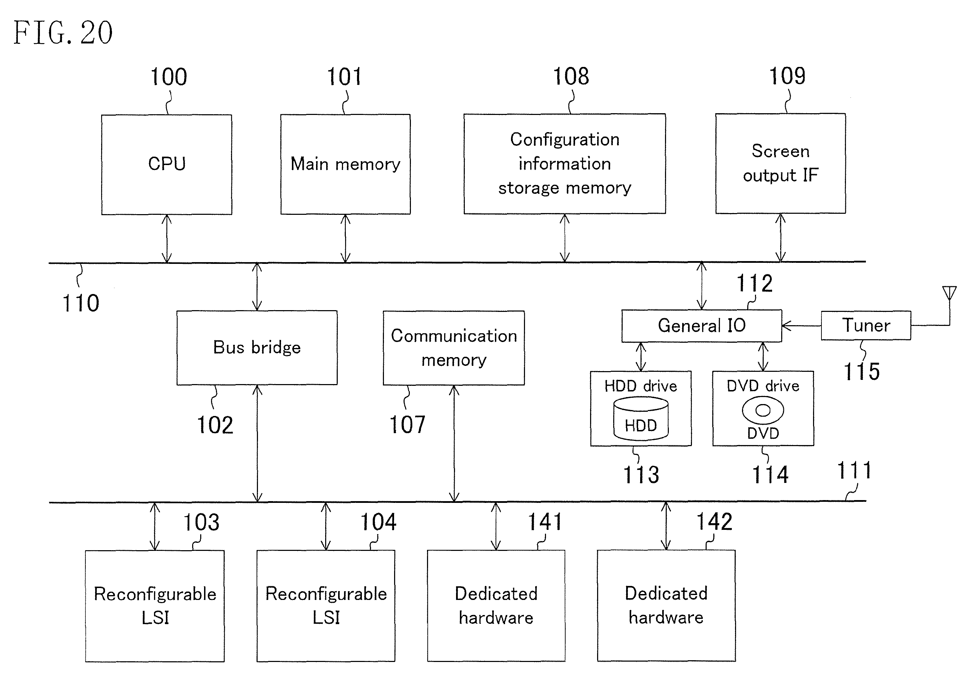

FIG. **20** shows a computer system to which dedicated hardware is connected in parallel with reconfigurable LSIs. Specifically, two pieces of dedicated hardware **141, 142** are connected to a communication bus **111** in parallel with reconfigurable LSIs **103, 104.** When the specification is settled, execution of a function by dedicated hardware, which is initially executed by a reconfigurable LSI, is more advantageous in reduction in circuit size and power consumption. In this case, the configuration information is generated again for a function other than the function to be executed by the dedicated hardware.

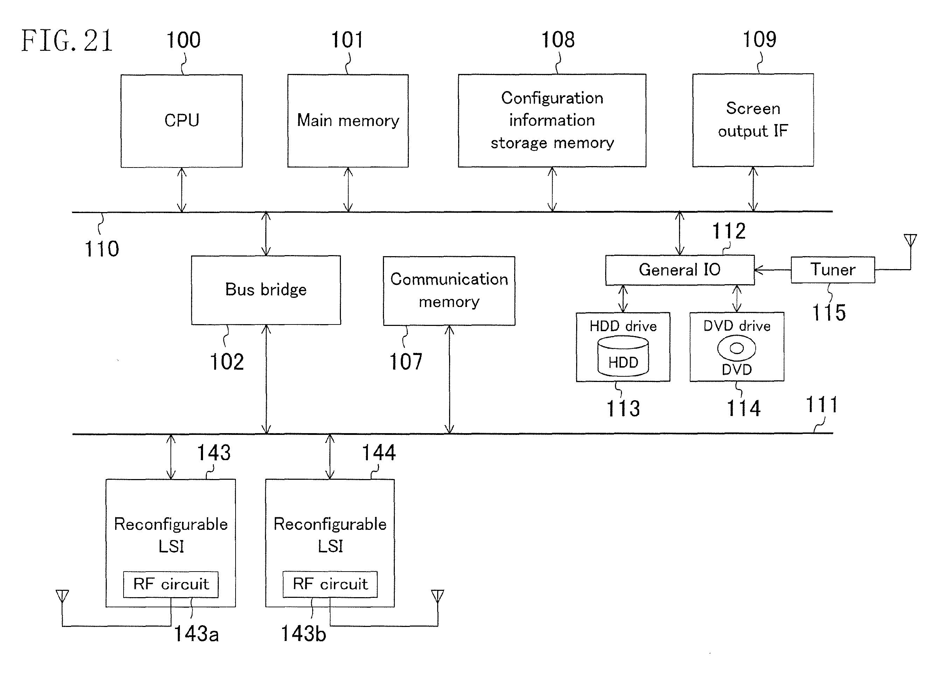

FIG. **21** shows a computer system to which reconfigurable LSIs each including an RF circuit are attached in contemplation of use for mobile phones. Reconfigurable LSIs **143, 144** include RF circuits **143a, 144a,** respectively, which are capable of addressing three modes of wireless LAN, mobile phone, and Bluetooth. With either one of the reconfigurable LSIs, communication can be performed by only one mode of the wireless LAN, the mobile phone, and the Bluetooth. In the case where simultaneous communication by two modes is necessitated, two reconfigurable LSI must be implemented because a double processing amount is needed for the communication. When the RF circuits **143a, 144a** capable of addressing the three modes are included in the two reconfigurable LSIs **143, 144,** respectively, simultaneous communication by two modes is permitted.

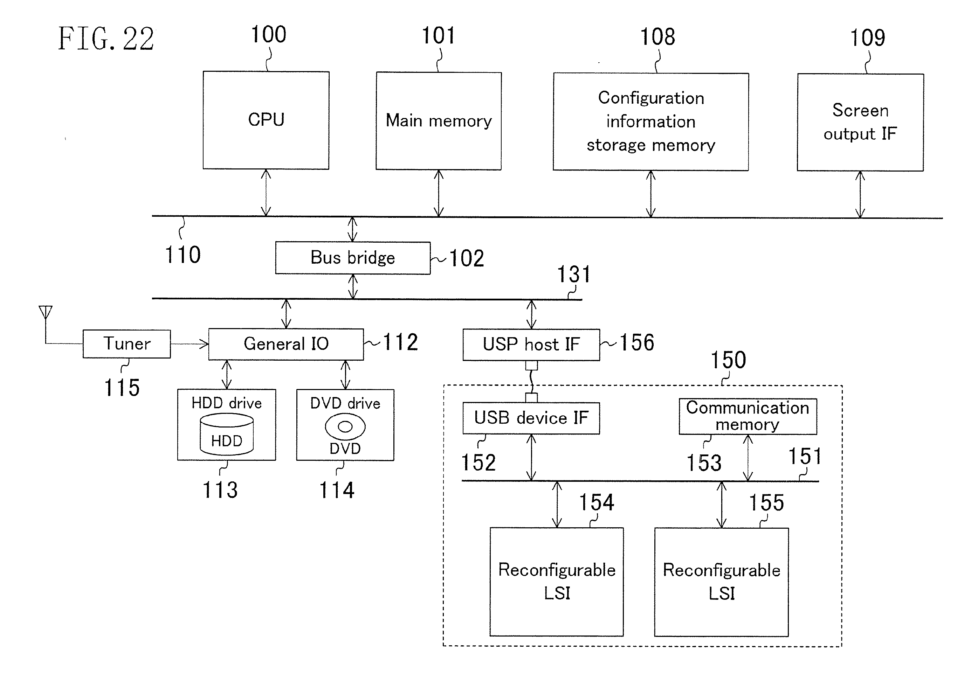

FIG. **22** shows a computer system to which a reconfigurable block is connected via a USB. In FIG. **22,** a reconfigurable block **150** includes a communication bus **151,** a USB device IF **152,** a communication memory **153,** and reconfigurable LSIs **154, 155** and is connected to the IO bus **131** via a USB host IF **156.**

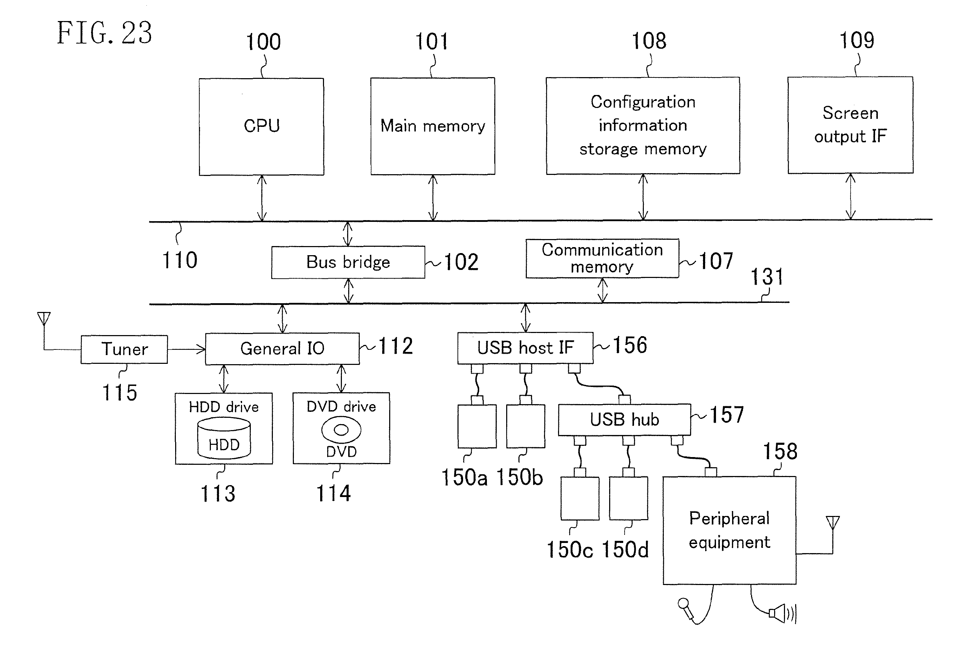

FIG. **23** shows a computer system to which reconfigurable blocks are hierarchically attached via a USB. In FIG. **23,** reconfigurable blocks **150a, 150b** are connected to a USB host IF **156** while reconfigurable blocks **150c, 150d** are connected to a USB hub **157** connected to the USB host IF **156.** Peripheral equipment **158** is also connected to the USB hub **157.** The peripheral equipment **158** is a device including an antenna section, an audio input section, and an audio output section and has a function utilized to a wireless telephone, a mobile phone, or the like. With this computer system, local processing is enabled between, for example, the peripheral equipment **158** and the reconfigurable blocks **150c, 150d.** The CPU **100** determines which configuration information should be mapped to which reconfigurable block. Accordingly, configuration information the most suitable to the respective connections of the reconfigurable blocks is mapped.

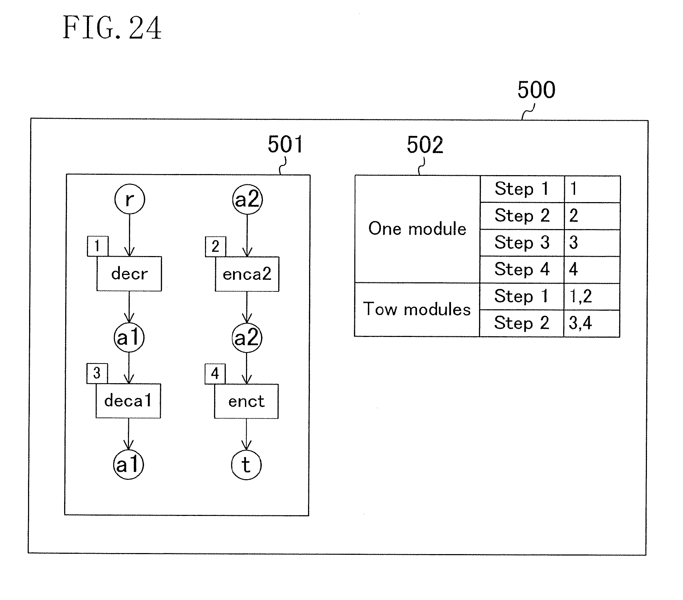

FIG. **24** is a conceptual diagram where configuration information taking extension by a USB hub into consideration is implemented. FIG. **24** shows configuration sequence determination information **500** on the reconfigurable blocks **150c, 150d** connected to each other via the USB hub **157** in the system architecture of FIG. **23.** The configuration sequence determination information **500** includes internal structure information **501** and implementation sequence information **502.** In the internal structure information **501,** a flow is indicated in which: received data (**r**) input from the antenna section of the peripheral equipment **158** is stream-coded (**deer**)**;** the thus decoded audio data (**a1**) is output and audio-decoded (**decal**); and the thus decoded audio data (**a1**) is output. As well, another flow is indicated in which: audio data (**a2**) input from the audio input section of the peripheral equipment **158** is audio-encoded (**enca2**); the thus encoded data (**a2**) is output and stream-encoded (**enct**); and transmission data (**t**) is output.

The configuration sequence determination information **500** in FIG. **24** is stored in the configuration information storage memory **108** together with configuration information (the same as that of FIG. **16,** for example) on the reconfigurable blocks **150a, 150b** connected to each other via the USB host IF **156** in **FIG.23.** The sub configuration data **decr, decal, enca2,** and **enct** are stored as well.

The reconfigurable blocks **150c, 150d** are used for processing that the peripheral equipment **158** connected to the USB hub **157** deals with. On the other hand, the reconfigurable blocks **150a, 150b** are used for processing a video input from the general IO **112** connected to the bus **131.** Accordingly, the reconfigurable blocks **150c, 150d** and the reconfigurable blocks **150a, 150b** are configured separately, and the respective pieces of configuration information thereof are stored separately.

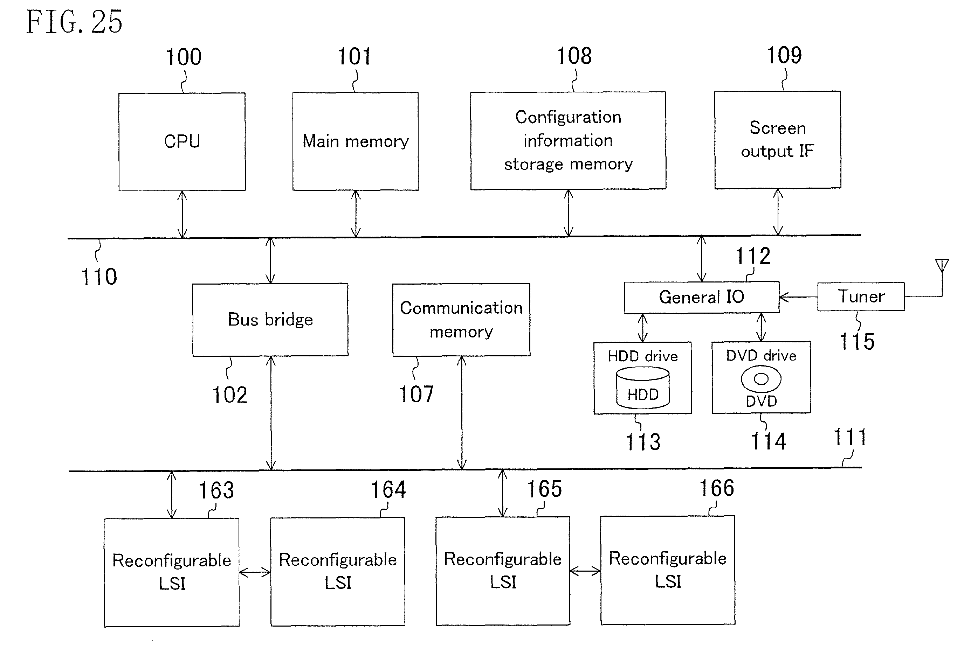

FIG. **25** shows a computer system to which reconfigurable LSIs are attached without being connected to a bus. In FIG. **25,** a reconfigurable LSI **164** is connected directly to a reconfigurable LSI **163** with no communication bus **111** interposed, and a reconfigurable LSI **166** is connected directly to a reconfigurable LSI **165** with no communication bus **111** interposed. This architecture is effective in the case, for example, where the reconfigurable LSI **164** communicates with only the reconfigurable LSI **163** with no communication with the reconfigurable LSIs **165, 166** needed.

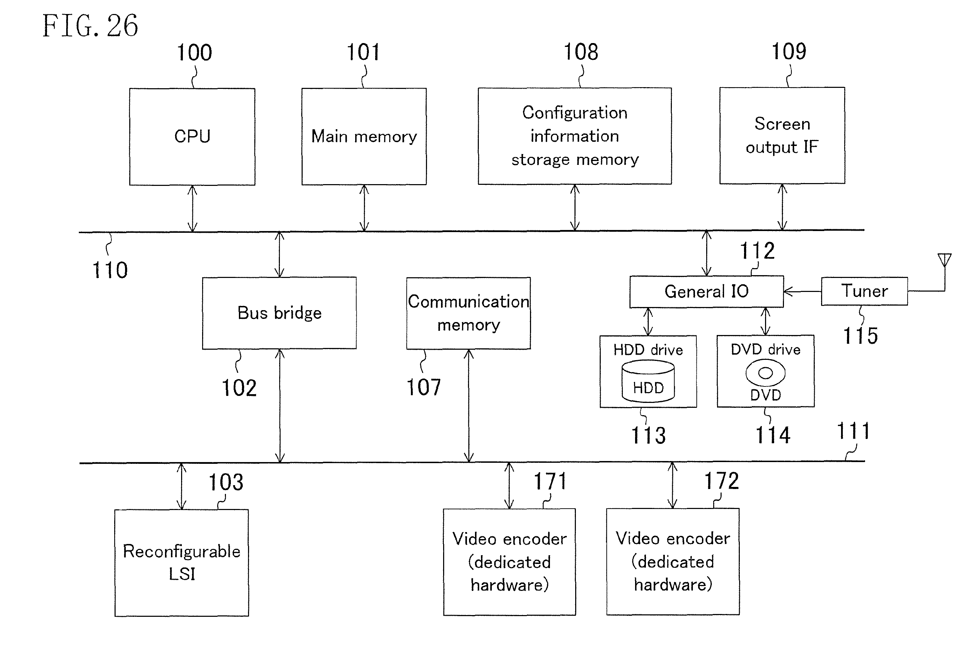

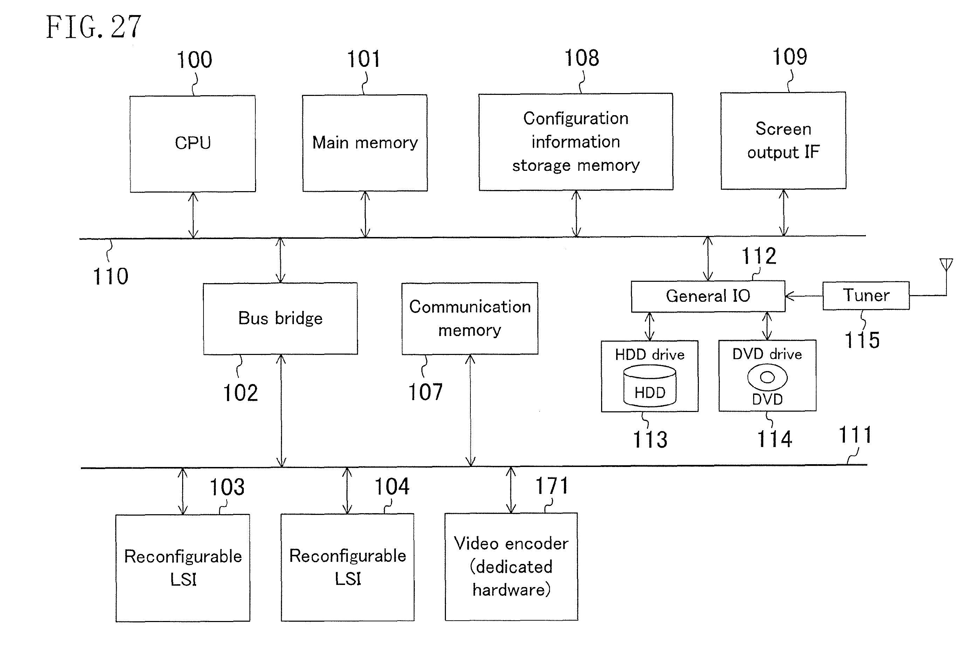

FIG. **26** shows an architecture where a video encoder **171** and a video decoder **172** are attached as dedicated LSIs in addition to a reconfigurable LSI. As well, FIG. **27** shows an architecture where a video encoder **171** is attached as a dedicated LSI in addition to two reconfigurable LSIs.

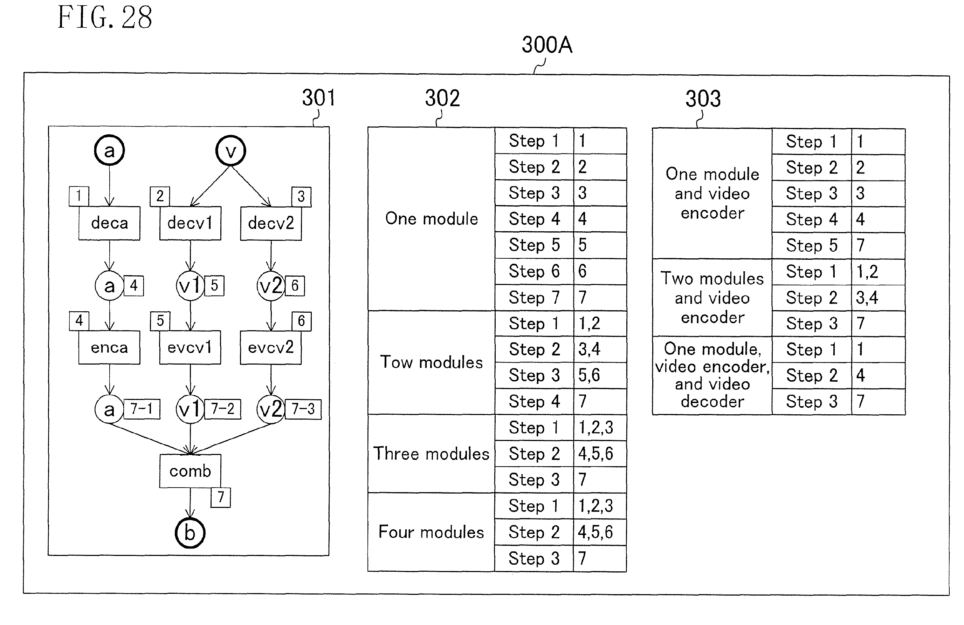

FIG. **28** is a conceptual drawing where configuration information generated is implemented with a fact taken into consideration that a video encoder or a video decoder will be attached as a dedicated LSI. The configuration sequence determination information **300** shown in FIG. **16** includes the implementation sequence information **302** that sets each processing shown in FIG. **7** to be executed step by step by only the reconfigurable LSI(s). In contrast, configuration sequence determination information **300A** shown in FIG. **28** includes, in addition to the implementation sequence information **302,** implementation sequence information **303** which takes it into consideration that when a video encoder or a video decoder is attached as a dedicated LSI, the attached one executes video encoding or video decoding.

In the internal structure information **301,** the video decoding **decv** and the video encoding **encv** are divided into two sub configuration data **decv1** and **dcv2** and two sub configuration data **encv1** and **encv2,** respectively. Wherein, the dedicated LSI is provided on the assumption that each of the above processing can be completed until a reconfiguration LSI completes processing by one step.

In general, the dedicated LSI, which is designed for executing specific processing at high speed, can complete the processing in a period of time shorter than a reconfigurable LSI. In the computer systems having the architectures shown in FIG. 26 and FIG. 27, the video encoder 171 and the video decoder 172 can execute thoroughly video encoding decv divided into two and video decoding encv divided into two, respectively, within a time period when the reconfigurable LSI executes a single unit of processing, such as audio decoding, audio encoding, or the like.

### Industrial Applicability

The present invention can increase the amount of processing to be executed and can cope with a new algorithm, such as compression/expansion of a video after purchase by attaching a reconfigurable module by a user, and therefore is suitable for utilization to video recording devices, such as a DVR and the like, for example.

Further, in the present invention, in the case where a reconfigurable module is developed of which processing ability is further increased by enhancing the operation frequency, increasing the number of transistors, or the like, replacement by the reconfigurable module attains processing with a less number of reconfigurable modules. Hence, power consumption in the same processing is reduced, and accordingly, the present invention is suitable to utilization to mobile phones, for example.

In addition, attachment of a reconfigurable module results in easy extension of the processing ability of a whole system, and accordingly, the present invention is suitable for workstations for addressing multimedia processing.

## Claims

1. A computer system, comprising:
a CPU; and
a configuration information storage section which stores configuration information for allowing a reconfigurable module to execute a predetermined function,
wherein the computer system is so structured that one or more reconfigurable modules are attachable, and
the CPU configures an attached reconfigurable module according to number of the attached reconfigurable module by referencing the configuration information stored in the configuration information storage section.

2. The computer system of Claim 1, further comprising:
a communication bus; and
a plurality of joint parts which are connected to the communication bus and to which the reconfigurable modules are attachable,
wherein the CUP is capable of communicating via the communication bus with any reconfigurable module attached to any of the joint parts.

3. The computer system of Claim 1,
wherein when the number of the attached reconfigurable module is changed, the CPU configures attached reconfigurable modules according to the number thereof after change by referencing the configuration information.

4. The computer system of Claim 1,
wherein the configuration information includes plural pieces of sub configuration data corresponding to divided functions into which the predetermined function is divided, and
the CPU executes configuration by assigning the plural pieces of sub configuration data to the attached reconfigurable modules.

5. The computer system of Claim 4,
wherein the configuration information includes configuration sequence determination information for determining assignment of the plural pieces of sub configuration data, and
the configuration sequence determination information includes internal structure information indicating a relationship between the plural pieces of sub configuration data and input/output data.

6. The computer system of Claim 5,
wherein the configuration sequence determination information includes dependence information indicating dependence between the plural pieces of sub configuration data.

7. The computer system of Claim 5,
wherein the configuration sequence determination information includes implementation sequence information indicating sequences of assignment of the plural pieces of sub configuration data which are determined according to variations in the number of to-be-attached reconfigurable modules.

8. The computer system of Claim 4,
wherein the configuration information further includes information on each size of the plural pieces of sub configuration data.

9. The computer system of Claim 4,
wherein each size of the plural pieces of sub configuration data is set within a predetermined size.

10. The computer system of Claim 4,
wherein the configuration information storage section includes plural pieces of the configuration information, and
the plural pieces of the configuration information are generated according to variations in the number of to-be-attached reconfigurable modules.

11. A data structure for representing configuration information for allowing a reconfigurable module to execute a predetermined function, comprising:
plural pieces of sub configuration data respectively corresponding to divided functions into which the predetermined function is divided; and
internal structure information indicating a relationship between the plural pieces of sub configuration data and input/output data.

12. The data structure of Claim 11, further comprising:
dependence information indicating dependence between the plural pieces of sub configuration data.

13. The data structure of Claim 11, further comprising:
implementation sequence information indicating sequences of assignment of the plural pieces of sub configuration data which are determined according to variations in the number of reconfigurable modules.

14. A data structure for representing configuration information for allowing a reconfigurable module to execute a predetermined function, comprising:
plural pieces of configuration information corresponding to variations in number of reconfigurable modules,
wherein each piece of configuration information includes plural pieces of sub configuration data respectively corresponding to divided functions into which the predetermined function is divided.

15. A mapping system for generating configuration information for allowing a reconfigurable module to execute a predetermined function, comprising:
an algorithm analyzing section which performs algorithm analysis on the predetermined function to generate a graph expressing a relationship between processing and input/output data; and
a configuration information generating section which generates, by dividing each processing in the graph with a predetermined size set as an upper limit, plural pieces of sub configuration data respectively corresponding to divided functions into which the predetermined function is divided and internal structure information indicating a relationship between the plural pieces of sub configuration data and input/output data.

16. A mapping method for generating configuration information for allowing a reconfigurable module to execute a predetermined function, comprising the steps of:
an algorithm analyzing step of performing algorithm analysis on the predetermined function to generate a graph expressing a relationship between processing and input/output data; and
a configuration information generating step of generating, by dividing each processing in the graph with a predetermined size set as an upper limit, plural pieces of sub configuration data respectively corresponding to divided functions into which the predetermined function is divided and internal structure information indicating a relationship between the plural pieces of sub configuration data and input/output data.
